# FASCICULE DE BREVET EUROPEEN

(11) **EP 2 138 711 B1**
(45) Date de publication et mention de la délivrance du brevet: **01.08.2012**
(21) Numéro de dépôt: 09162301.7
(22) Date de dépôt: 09.06.2009
(51) Int. Cl.: F02N 11/08

(54) **Procédé de commande du dispositif d'arrêt et de redemarrage automatique du moteur thermique d'un vehicule**
Verfahren zur Steuerung einer Vorrichtung zum Ausschalten und automatischen Neustart eines Verbrennungsmotors eines Fahrzeugs
Method of controlling the device for stopping and automatic restarting of a vehicle heat engine

(30) Priorité: 24.06.2008 FR 0854194
(43) Date de publication de la demande: 30.12.2009
(73) Titulaire: Peugeot Citroën Automobiles SA, 78140 Vélizy-Villacoublay (FR)
(72) Inventeur: Klein, Hervé, 92300 Levallois Perret (FR)
(74) Mandataire: Ménès, Catherine

(56) Documents cités:
- EP-A- 1 564 403
- DE-A1- 10 038 280
- JP-A- 58 162 748
- US-A1- 2002 017 261
- US-B1- 7 003 395

## Description

La présente invention concerne un procédé de commande d'un dispositif d'arrêt et de redémarrage automatique du moteur thermique d'un véhicule.

Afin de réaliser des économies de carburant et de diminuer la pollution de l'air, certains véhicules automobiles sont munis d'un dispositif d'arrêt et de redémarrage automatique du moteur thermique, dispositif connu sous l'appellation Stop & Start (S&S en abrégé). Ainsi, le moteur thermique s'arrête sans intervention du conducteur lorsque certaines conditions sont réunies, par exemple lorsque le véhicule est à l'arrêt à un feu de signalisation rouge ou immobilisé dans un embouteillage. La remise en marche automatique du moteur peut être effectuée à l'aide d'un démarreur classique. Le véhicule comporte généralement une source d'énergie électrique, tels qu'une batterie, qui alimente le démarreur du moteur thermique ainsi que le réseau électrique de bord du véhicule qui comprends divers accessoires consommateurs de courant électrique tels que les phares, les essuie-glaces, le climatiseur ou encore la radio. La source d'énergie électrique est rechargée par un alternateur qui ne fonctionne que lorsque le moteur thermique est en marche. Cette source d'énergie n'est donc pas rechargée pendant les arrêts du moteur, pendant lesquels elle peut au contraire être déchargée par la consommation électrique des accessoires connectés au réseau de bord. Afin de garantir le redémarrage automatique du moteur thermique, il est nécessaire de s'assurer que l'état de charge de la source d'énergie est au moins égal à un seuil minimum. Pour cette raison, l'arrêt automatique du moteur thermique n'est généralement commandé par la fonction S&S que si l'état de charge de la source d'énergie est au moins égal à un seuil prédéterminé. Cependant cette condition n'est pas suffisante car elle ne préjuge pas des possibilités de recharger la source d'énergie au cours du trajet du véhicule.

La présente invention propose de prendre en compte, dans les conditions d'autorisation de l'arrêt automatique du moteur, la capacité (i.e. les possibilités) de recharge de la batterie.

De façon plus précise, l'invention propose un procédé de commande du dispositif d'arrêt et de redémarrage automatique du moteur thermique d'un véhicule, ledit dispositif comprenant une source d'énergie électrique, telle qu'une batterie par exemple. Selon l'invention, l'arrêt automatique du moteur est commandé en fonction d'au moins un paramètre caractéristique de l'acceptance de charge de la source d'énergie électrique.

L'acceptance de charge peut être déterminée par exemple en fonction de la température de la source d'énergie électrique et éventuellement en fonction de la charge de la source d'énergie électrique.

De façon avantageuse :
- l'arrêt automatique du moteur n'est plus autorisé lorsque la température de la source d'énergie électrique est inférieure à un seul prédéterminé, choisi par exemple au environ de 0°C.
- une demande d'arrêt automatique du moteur n'est acceptée que si la charge de la source d'énergie électrique a évoluée, depuis le dernier redémarrage du moteur, d'une quantité ΔQ prédéterminée, et éventuellement que si la charge de la source d'énergie électrique est supérieure à un seuil SOC (min) prédéterminé.

D'autres avantages et caractéristiques de l'invention apparaîtront au cours de la description qui suit de plusieurs modes de mise en oeuvre de l'invention, donnés à titre d'exemples non limitatifs, en référence aux dessins annexés et sur lesquels :
- la figure 1 montre l'évolution de l'état de charge d'une batterie pour des températures de batterie faibles ; et
- la figure 2 représente l'évolution de l'état de charge d'une batterie pour des températures de batterie faibles, en appliquant un mode de mise en oeuvre du procédé selon l'invention.

L'invention s'applique aux véhicules équipés d'un moteur thermique et d'un dispositif d'arrêt et de redémarrage automatique (fonction S&S) du moteur thermique. Avec ce type de dispositif, le redémarrage est assuré généralement par un démarreur alimenté par une source d'énergie électrique, telle qu'une batterie ou un supercondensateur. Par la suite, on parlera de « batterie » sachant que ce terme couvre de façon générale une source d'énergie électrique. L'arrêt automatique est commandé par un contrôleur en fonction de la réalisation de certaines conditions, par exemple en fonction de la vitesse du véhicule. Afin de pouvoir redémarrer le moteur thermique, le contrôleur tient généralement compte de l'état de charge de la batterie.

L'invention consiste à prendre en compte, dans les conditions d'autorisation de l'arrêt du moteur thermique, d'au moins un paramètre caractéristique de la capacité de charger la batterie (« la capacitance de charge »), qui peut être en complément de son état de charge. Ceci permet notamment d'optimiser la consommation de l'énergie électrique en répartissant les phases d'arrêt du moteur au cours d'un trajet en fonction de l'acceptance de charge de la batterie.

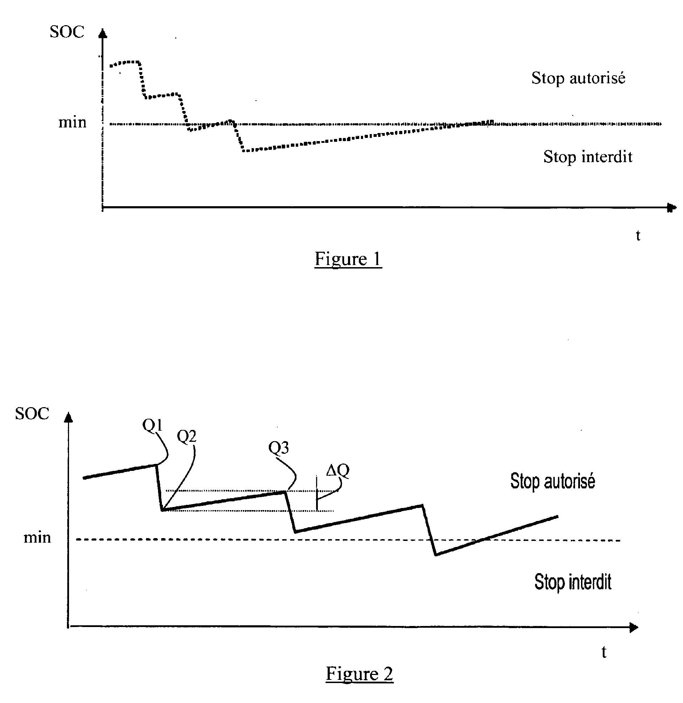

L'acceptance de charge d'une batterie est proportionnelle à sa température et inversement proportionnelle à sa charge. Ainsi une batterie chaude et faiblement chargée accepte un courant de charge plus important qu'une batterie froide et plus chargée. Par exemple, en dessous de O°C, l'acceptance de charge est très faible, voire nulle. En conséquence, lors de l'utilisation d'un véhicule équipé de la fonction S&S dans des conditions climatiques froides, la batterie ne pouvant pratiquement pas être rechargée, les phases d'arrêts sont concentrées au début du roulage du véhicule. C'est ce qui est illustré sur la figure 1.

La figure 1 représente la charge SOC de la batterie en fonction du temps t pour des températures de batterie faibles. Le seuil indiqué par « min » correspond à un état de charge minimal de la batterie en dessous duquel le contrôleur n'autorise pas l'arrêt automatique du moteur et au dessus duquel l'arrêt est autorisé (si bien entendu les conditions habituelles d'arrêt sont remplies, telles qu'une vitesse minimale). On remarque que les arrêts ne sont autorisés qu'au début du roulage, jusqu'à ce que l'état de charge SOC de la batterie passe en dessous du seuil minimal.

Afin d'éviter les situations illustrées par la figure 1, le contrôleur n'autorise l'arrêt du moteur thermique que si tout ou partie de la charge perdue par la batterie lors de la phase d'arrêt précédente a été récupérée pendant la phase de roulage suivante. La figure 2 représente l'évolution de l'état de charge SOC de la batterie au cours du temps t. L'arrêt du moteur a été commandé aux temps t₁ et t₃. Juste après l'arrêt du moteur au temps t₁, le moteur est redémarré au temps t₂. Si l'état de charge de la batterie est égale à Q1, Q2 et Q3 respectivement au temps t₁, t₂ et t₃, après le redémarrage du moteur au temps t₂ , la batterie a été déchargée d'une certaine quantité d'électricité correspondant à (Q1 - Q2). Selon l'invention, on détermine la différence de charge de la batterie ΔQ = (Q3 - Q2) entre le temps de la demande d'arrêt du moteur au temps t₃ et le temps t₂ correspondant au redémarrage précédent du moteur. La quantité d'énergie électrique ΔQ est ensuite comparée à une quantité minimale prédéterminée ΔQ min. Si ΔQ ≥ ΔQ min, l'arrêt automatique du moteur est autorisé. Dans le cas contraire ΔQ < ΔQ min), l'arrêt n'est pas autorisé. La valeur prédéterminée de la partie d'énergie électrique ΔQ min à récupérer peut être ajustée en fonction de la température de la batterie (ou de la température extérieure) et/ou de l'état de charge de la batterie.

On remarque sur la figure 2 qu'il est possible de combiner la condition de recharge minimale de la batterie avec une condition de seuil de l'état de charge. Ainsi, l'arrêt automatique est refusé si l'état de charge de la batterie est inférieur à un état minimal SOC min.

L'invention permet ainsi de répartir automatiquement les phases d'arrêt du moteur thermique en fonction de l'énergie disponible dans la batterie et /ou en fonction de sa capacité à se recharger. Le procédé permet donc d'optimiser la consommation d'énergie électrique du véhicule.

D'autres modes de mise en oeuvre que ceux décrits et représentés peuvent être conçus par l'homme du métier sans sortir du cadre de la présente invention tel que définit dans les revendications.

## Revendications

1. Procédé de commande du dispositif d'arrêt et de redémarrage automatique du moteur thermique d'un véhicule, ledit dispositif comprenant une source d'énergie électrique, et l'arrêt automatique du moteur étant commandé en fonction d'au moins un paramètre caractéristique de la source d'énergie électrique, **caractérisé en ce qu'**une demande d'arrêt automatique du moteur n'est acceptée que si la capacitance de charge de la source d'énergie électrique est jugée suffisante, la charge de la source d'énergie électrique ayant évolué, depuis le dernier redémarrage du moteur, au minimum d'une quantité ΔQ min prédéterminée.

2. Procédé selon la revendication 1 **caractérisé en ce que** ledit paramètre est la température de la source d'énergie électrique.

3. Procédé selon l'une des revendications précédentes **caractérisé en ce que** l'arrêt automatique du moteur n'est plus autorisé lorsque la température de la source d'énergie électrique est inférieure à un seul prédéterminé.

4. Procédé selon la revendication 3 **caractérisé en ce que** ledit seuil est choisi au environ de 0°C.

5. Procédé selon la revendication 1 **caractérisé en ce qu'**une demande d'arrêt automatique du moteur n'est acceptée que si la charge de la source d'énergie électrique est supérieure à un seuil SOC (min) prédéterminé.

6. Procédé selon la revendication 1 ou la revendication 5, **caractérisé en ce que** ladite quantité ΔQ min est prédéterminée en fonction de la température de la source d'énergie électrique ou de la température extérieure.

7. Procédé selon l'une des revendications précédentes **caractérisé en ce que** ladite source d'énergie électrique est une batterie.

## Claims

1. Method of controlling the device for the automatic stopping and restarting of the thermal engine of a vehicle, said device comprising an electrical energy source, and the automatic stopping of the engine being controlled according to at least one parameter characteristic of the electrical energy source, **characterised in that** a request for automatic stopping of the engine is accepted only if the charge capacitance of the electrical energy source is deemed sufficient, the charge of the electrical energy source having changed, since the last restarting of the engine, at a minimum by a predetermined quantity ΔQ min.

2. Method according to claim 1, **characterised in that** said parameter is the temperature of the electrical energy source.

3. Method according to one of the preceding claims, **characterised in that** the automatic stopping of the engine is no longer enabled when the temperature of the electrical energy source is below a predetermined threshold.

4. Method according to claim 3, **characterised in that** said threshold is chosen at approximately 0°C.

5. Method according to claim 1, **characterised in that** a request for automatic stopping of the engine is accepted only if the charge of the electrical energy source is above a predetermined SOC (min) threshold.

6. Method according to claim 1 or claim 5, **characterised in that** said quantity ΔQ min is predetermined according to the temperature of the electrical energy source or the external temperature.

7. Method according one of the preceding claims, **characterised in that** said electrical energy source is a battery.

## Patentansprüche

1. Verfahren zum Steuern der automatischen Start- und Stoppvorrichtung des Verbrennungsmotors eines Fahrzeugs, wobei die besagte Vorrichtung eine elektrische Energiequelle umfasst, und der automatische Stopp des Motors in Abhängigkeit von zumindest einem charakteristischen Parameter der elektrischen Energiequelle angesteuert wird, **dadurch gekennzeichnet, dass** eine Anforderung für den automatischen Stopp des Motors nur dann angenommen wird, wenn die Ladekapazität der elektrischen Energiequelle als ausreichend beurteilt wird, wobei sich die Ladung der elektrischen Energiequelle seit dem letzten Motorstart um zumindest einen vorbestimmten Mindestwert von ΔQ verändert hat.

2. Verfahren nach Anspruch 1, **dadurch gekennzeichnet, dass** der besagte Parameter die Temperatur der elektrischen Energiequelle ist.

3. Verfahren nach irgendeinem der vorherigen Ansprüche, **dadurch gekennzeichnet, dass** der automatische Stopp des Motors nicht zugelassen wird, wenn die Temperatur der elektrischen Energiequelle unter einem vorbestimmten Grenzwert liegt.

4. Verfahren nach Anspruch 3, **dadurch gekennzeichnet, dass** der besagte Grenzwert bei etwa 0 °C liegt.

5. Verfahren nach Anspruch 1, **dadurch gekennzeichnet, dass** eine Anforderung für den automatischen Stopp des Motors nur dann angenommen wird, wenn die Ladung der elektrischen Energiequelle über einem vorbestimmten Grenzwert SOC (mind.) liegt.

6. Verfahren nach Anspruch 1 oder nach Anspruch 5, **dadurch gekennzeichnet, dass** der besagte Mindestwert ΔQ in Abhängigkeit von der Temperatur der elektrischen Energiequelle oder der Außentemperatur vorbestimmt wird.

7. Verfahren nach einem der vorherigen Ansprüche, **dadurch gekennzeichnet, dass** die besagte elektrische Energiequelle eine Batterie ist.
